# FASCICULE DE BREVET EUROPEEN

(11) **EP 2 757 636 B1**
(45) Date de publication et mention de la délivrance du brevet: **14.10.2015**
(21) Numéro de dépôt: 14164441.9
(22) Date de dépôt: 17.11.2011
(51) Int. Cl.: H01R 4/72, H01B 7/17, B29C 61/06, H02G 3/04

(54) **Barrière de protection thermo-rétractable**
Wärmeschrumpfende Schutzbarriere
Heat-retractable protection barrier

(30) Priorité: 17.11.2010 FR 1059432
(43) Date de publication de la demande: 23.07.2014
(62) Demande divisionnaire de: 11189477.0
(73) Titulaire: Berkem Developpement, 33049 Bordeaux Cedex (FR)
(72) Inventeur: Fahy, Olivier, 24100 LEMBRAS (FR); Messaoudi, Daouïa, 69800 SAINT-PRIEST (FR)
(74) Mandataire: Ipside

(56) Documents cités:
- EP-A1- 0 857 750
- EP-A2- 2 399 458
- EP-B1- 1 330 160
- DE-A1- 19 638 244
- DE-B- 1 196 115
- JP-A- 2007 222 040
- US-A- 4 988 236
- US-A- 5 067 831
- US-A- 5 096 206
- US-A- 5 413 790
- US-A- 5 675 032
- US-A1- 2006 148 651

## Description

La présente invention concerne une barrière de protection thermo-rétractable pour protéger des objets semi-enterrés ou enterrés contre les racines et les insectes vivants ou se déplaçant dans le sol. Elle concerne également une enveloppe tubulaire thermo-rétractable formée à partir d'une telle barrière de protection.

Il est connu que les conduits souterrains utilisés tant dans le bâtiment, l'industrie que dans la production, le transport et la distribution d'eau et d'énergie sont victimes de dégradations biologiques qui au fil du temps sont susceptibles d'altérer ou détruire leur fonctionnalité.

S'entendent par conduit souterrains aussi bien les conduites d'alimentation ou d'écoulement d'eau d'un bâtiment ou d'une installation que les tuyaux destinés au passage de câbles électriques, pneumatiques ou optiques, ainsi que les drains destinés à la collecte et l'élimination des eaux souterraines.

On observe que ces conduits enterrés dans le sol, ou les joints dont ils sont pourvus, sont à terme colonisés par les racines des végétaux et divers invertébrés vivants ou se déplaçant dans le sol.

Les exemples de drains obstrués par des racines sont nombreux et nécessitent de lourdes et coûteuses opérations de remplacement.

Par ailleurs, les termites dégradent fréquemment les conduites de circulation ou d'alimentation en eau afin d'y puiser le liquide nécessaire à leur survie.

Or, le traitement dans la masse de ces conduits n'est pas toujours possible pour des raisons physiques ou chimiques.

De même, le traitement par incorporation de substances biocides dans la masse des matériaux constitutifs de conduites de liquide à usage alimentaire est, pour d'évidentes raisons de toxicité, exclu.

Le document EP 0 857 750 A1 décrit: une barrière de protection pour un objet semi-enterré ou enterré, ladite barrière comportant une feuille de matière plastique longitudinale dont la dimension transversale est instable à la chaleur, ladite feuille comportant au moins un agent insecticide de manière à former une barrière matérielle contre les insectes vivants ou se déplaçant dans le sol, ladite barrière de protection ayant une structure multicouches, elle comprend une couche externe et une couche interne comportant un agent insecticide, ladite couche externe étant formée à partir d'un polymère thermo-rétractable.

L'objectif de la présente invention est donc de proposer une protection matérielle s'interposant entre le sol et l'élément à protéger, qui soit simple et économique, facile à mettre en oeuvre et permettant de prévenir ou de minimiser les dommages causés par les racines et les termites ou autres insectes.

Un autre objet de la présente invention est une protection qui vienne enserrer totalement l'élément à protéger tout en étant aisée à positionner autour de cet élément.

A cet effet, l'invention concerne une barrière de protection souple pour un objet semi-enterré ou enterré selon la revendication 1.

Selon l'invention, cette barrière de protection comporte une feuille de matière plastique longitudinale dont la dimension transversale est instable à la chaleur, ladite feuille comportant au moins un agent anti-racine et un agent insecticide de manière à former une barrière matérielle contre les racines et les insectes vivants ou se déplaçant dans le sol, et cette barrière ayant une structure multicouches, elle comprend une couche externe comportant un agent anti-racine et une couche interne comportant un agent insecticide au moins la couche externe étant formée à partir d'un mélange d'un ou plusieurs polymères thermo-rétractable et d'un ou plusieurs polymères non thermo-rétractables.

Cette feuille comporte à la fois un agent anti-racine et un agent insecticide de manière à protéger efficacement l'objet enterré ou semi-enterré.

On entend par "une feuille de matière plastique longitudinale" qu'il s'agit d'une feuille en bande ou encore d'une feuille se présentant sous la forme d'une bande.

Dans différents modes de réalisation particuliers de cette barrière de protection, chacun ayant ses avantages particuliers et susceptibles de nombreuses combinaisons techniques possibles:
- cette barrière est d'un seul tenant,
On entend par la "barrière est d'un seul tenant" que cette barrière de protection est obtenue d'une seule pièce et ne résulte donc pas de l'assemblage d'éléments initialement distincts.
De préférence, les couches externe et interne présentent une dimension transversale instable à la chaleur.
Avantageusement ladite au moins une couche externe comprendra de 10% à 50% en poids d'au moins un polymère thermo-rétractable et de 90% à 50% en poids d'au moins un polymère non thermo-rétractable.
Ainsi, on s'assurera qu'après rétraction du film, ou de l'enveloppe tubulaire formée par assemblage des bords latéraux de ce film, ladite au moins une couche externe présentera les mêmes propriétés mécaniques (résistance à la déchirure et/ou à l'impact, module d'élasticité, allongement à la rupture, ...) qu'un film à base uniquement de polymère non thermo-rétractable. La préservation pour ce film thermo-rétractable des propriétés mécaniques connues pour les films non thermo-rétractables permet d'assurer le respect des critères de garantie décennale dans le domaine du bâtiment et de la construction.
A titre purement illustratif, le ou les polymères thermo-rétractables seront choisis dans le groupe comprenant un copolymère éthylène-(meth)acrylate d'alkyle, un copolymère d'éthylène et d'ester vinylique d'acide carboxylique saturé, un copolymère éthylène-acétate de vinyle, un polychlorure de vinylydène (PVDC), un fluoropolymère tel que le polymère perfluoro(éthylène-propylène) (FEP) ou le Perfluoroalkoxy (PFA).
De préférence, la couche externe comporte également au moins un absorbeur d'ultraviolet (UV).
Avantageusement, la couche externe a une perméabilité à la vapeur d'eau inférieure ou égale à 1,5 g/m²/jour.1013,25 hPa, telle que la perméabilité à la vapeur d'eau est mesurée sous une pression de 1013,25 hPa sur une surface de 1 m² pendant 24 heures à 25°C et à une humidité relative de 60%.
A titre purement illustratif, le ou les polymères non thermo-rétractables de la couche externe sont alors choisis dans le groupe comprenant le polyéthylène, le polypropylène, le copolymère réticulé d'éthylène et d'acétate de vinyle, le copolymère d'éthylène-alcool vinylique et le polybutène.
- cette couche externe a de plus une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%,
Un exemple de polymère à base de polyoléfine ayant à la fois une perméabilité inférieure à la vapeur d'eau mentionnée ci-dessus et une perméabilité inférieure à l'oxygène mentionnée ci-dessus est le polyéthylène.
De manière plus générale, la couche interne chargée d'insecticide anti-termite est renforcée par pelliculage de sa face active venant au contact du sol à l'aide d'une couche externe de polymère formant une barrière étanche aux conditions de pH du milieu susceptible d'entrainer la dégradation du principe actif insecticide.
Alternativement, cette barrière comprend de plus une couche intermédiaire, cette couche intermédiaire ayant une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%,
Un exemple de polymère à base de polyoléfine ayant une perméabilité inférieure à l'oxygène mentionnée ci-dessus est le polyéthylène.
- cette couche externe a une épaisseur comprise entre 10 et 150 µm, et encore mieux entre 50 et 100 µm, de manière à limiter la surface de dégradation de la couche externe causée par des insectes avant leur contact avec l'agent insecticide de ladite couche interne,
- les couches interne et externe sont obtenues avec des résines à base de polyoléfines distinctes,
- cette feuille comprend au moins un additif choisi dans le groupe comprenant un agent glissant, un agent antistatique, un agent anti-bloquant, un colorant, un pigment et des combinaisons de ces éléments,
- l'agent anti-racine est un dérivé chlorophénoxy,
Par exemple, cet agent anti-racine est l'acide 2-(4-chloro-2-méthylphénoxy) propionique, encore appelé acide MCPP.
Il est à noter que cet agent anti-racine est une substance chimique à propriétés non pesticide et non biocide. L'agent anti-racine n'a pas d'effet mortel vis-à-vis des racines et arbres/plantes.
L'effet anti-racine est un effet de contact. Les pointes des racines après contact avec la barrière se lignifient, c'est-à-dire que la croissance de ces racines est d'abord ralentie pour ensuite être stoppée. En aucun cas, l'arbre ou la plante ne meurt car les autres racines par effet mémoire se déploient dans des zones plus favorables. La préservation de la plante ou de l'arbre est ainsi avantageusement assurée.
L'agent anti-racine est donc un agent anti-racine à effet de contact.
- ledit insecticide est choisi dans la famille des pyréthrinoïdes, néonicotinoïdes ou carbamates.
A titre illustratif, on pourra choisir cet insecticide dans le groupe comprenant la bifenthrine, l'alpha-cyperméthrine, la cyperméthrine, la perméthrine.

L'invention concerne encore une gaine thermo-rétractable pour protéger une conduite ou un tuyau. Selon l'invention, cette gaine est constituée une barrière de protection telle que décrite précédemment.

Cette gaine thermo-rétractable est alors formée par assemblage des bords latéraux de la feuille longitudinale.

Cette gaine est particulièrement adaptée pour venir enserrer des conduites, des paquets de gaines électriques destinés à être enterrés afin d'assurer leur protection.

Puisque cette gaine est rapportée, elle peut avantageusement être mise en oeuvre pour protéger des conduites transportant des eaux destinées à la consommation sans présenter de nocivité pour le consommateur final.

Avantageusement, lorsque la conduite à protéger fait office de drain, cette gaine est micro-perforée afin de permettre un écoulement des liquides.

Selon un procédé de fabrication d'une barrière de protection thermo-rétractable telle que décrite précédemment on réalise les étapes suivantes :
a) on introduit et on repartie de manière homogène au moins un agent anti-racine et/ou agent insecticide dans une matière plastique de base,
b) on fabrique à partir de la composition ainsi obtenue et fondue, une feuille en bande que l'on étire transversalement tandis qu'on la chauffe au-dessus du point de fusion cristalline de la matière plastique de base, ce point de fusion étant en dessous du point de décomposition dudit agent anti-racine et/ou dudit agent insecticide de manière à ne pas déstabiliser ledit ou lesdits agents,
c) on refroidit ladite feuille en bande ainsi obtenue.

De préférence, avant de refroidir ladite feuille, on met ladite feuille en forme de tube ou sensiblement tubulaire. On forme ainsi un tube ou une enveloppe tubulaire thermo-rétractable.

Avantageusement, à l'étape a), on introduit ledit au moins un agent anti-racine et/ou agent insecticide dans ladite matière plastique de base à une température comprise entre 150°C et 200 °C, et plusprécisément entre 170°C et 200°C dans le cas de PEBD.

De préférence, on mélange de 10% à 50% en poids d'au moins un polymère thermo-rétractable à 90% à 50% en poids de polymère non thermo-rétractable pour former ladite matière plastique de base.
La ou les polyoléfines non thermo-rétractables pourront être choisies dans le groupe comprenant le polyéthylène (PE), le polypropylène (PP), un copolymère d'éthylène-propylène (EPR), le polybutène (PB), le polyméthylpentène (PMP), l'éthylène-acétate de vinyle (EVA) et le polyamide (PA).
A titre illustratif, le ou les polymères thermo-rétractables seront choisis dans le groupe comprenant un copolymère éthylène-(meth)acrylate d'alkyle, un copolymère d'éthylène et d'ester vinylique d'acide carboxylique saturé, un copolymère éthylène-acétate de vinyle, un polychlorure de vinylydène (PVDC), un fluoropolymère tel que le polymère perfluoro(éthylène-propylène) (FEP) ou le Perfluoroalkoxy (PFA).
Avantageusement, au moins un agent glissant peut être incorporé dans la composition fondue, préalablement à la préparation de la feuille par extrusion. Cet agent glissant est incorporé de manière à être présent dans les couches les plus externes de la feuille. Un tel agent glissant peut par exemple être choisi parmi les amides d'acides gras comme l'érucamide et peut être introduit à raison de 200 à 5 000 ppm.
En général, un tel agent glissant est incorporé dans la feuille si l'on ne prévoit pas de l'imprimer. Cet agent glissant permet de réduire les frottements résultant d'un contact entre la barrière de protection thermo-rétractable avec une autre surface en matière plastique ou autre.
A titre illustratif, cet agent glissant facilitera le positionnement de l'enveloppe tubulaire thermo-rétractable par rapport à une conduite ou à un paquet de gaines électriques à protéger. Il est en effet connu qu'en essayant de faire glisser un tube sur des câbles de très grandes dimensions, ces câbles deviennent difficiles à introduire dans l'extrémité opposée du tube.
Au moins un agent anti-bloquant peut également être incorporé dans la composition fondue, préalablement à la préparation de la feuille par extrusion. Cet agent anti-bloquant est incorporé de manière à être présent dans les couches les plus externes de la feuille. Cet agent anti-bloquant a pour fonction de diminuer la tendance de la feuille à adhérer sur elle-même lorsqu'elle est enroulée en bobine, de façon à faciliter son déroulement.
Un tel agent anti-bloquant comprend généralement des particules de charge minérale telle que la silice.
Préalablement à son utilisation, il est possible de conférer à la feuille des propriétés antistatiques. Ces propriétés antistatiques permettent à la feuille de se maintenir bien à plat et de bien glisser sur les machines de fabrication, sans avoir tendance à s'enrouler sur elle-même, ce qui risquerait de perturber, voire bloquer tout le processus de fabrication.
Par exemple, les propriétés antistatiques peuvent être apportées à la feuille par enduction de ses couches externes au moyen d'une solution d'un agent antistatique. Des agents antistatiques de la famille des alkylamines sont connus.

L'invention concerne enfin l'utilisation de l'enveloppe tubulaire formée à partir de ladite barrière de protection telle que décrite précédemment ou obtenue par le procédé de fabrication tel que décrit précédemment, pour assurer la jonction étanche d'un film de protection et d'un manchon de protection, ledit film et ledit manchon étant destinés à former une barrière matérielle d'un objet enterré ou semi-enterré contre les racines et/ou les insectes vivants ou se déplaçant dans le sol.

Selon l'invention, on réalise les étapes suivantes:
a) on réalise une découpe dans ledit film de protection pour permettre le passage dudit manchon de protection,
b) on introduit ledit manchon au travers de ladite découpe en s'assurant qu'une partie de recouvrement dudit film de protection formant alors saillie du reste dudit film de protection recouvre au moins partiellement le pourtour de la partie dudit manchon ayant passé au travers de ladite découpe,
c) on introduit par l'extrémité libre de ladite partie dudit manchon ayant passé au travers de ladite découpe, ladite enveloppe tubulaire et on positionne ladite enveloppe tubulaire de sorte qu'elle recouvre au moins partiellement ladite partie de recouvrement et ledit manchon,
d) on chauffe ladite enveloppe tubulaire de sorte qu'elle enserre ladite partie de recouvrement dudit film de protection et ledit manchon de protection.

Bien entendu, le film de protection et le manchon de protection comprennent chacun moins un agent anti-racine et/ou agent insecticide. On obtient ainsi une barrière matérielle formant un écran intégral aux racines et/ou aux termites, cette barrière comportant un film plan ou sensiblement plan et un manchon formant une cheminée d'axe principal hors du plan de ce film, cette cheminée permettant le passage par exemple de gaines électriques.

De préférence, ayant réalisé à l'étape a) une découpe en croix dudit film de protection, on s'assure à l'étape b) que l'ensemble des portions libres dudit film résultant de cette découpe et solidaires dudit film, entourent la partie dudit manchon ayant passé au travers de ladite découpe. Ces portions libres forment alors la partie de recouvrement dudit film de protection.

Avantageusement, à l'étape d), on applique une température homogène sur l'ensemble de ladite enveloppe tubulaire pour éviter l'apparition d'un point de rupture locale dans ladite enveloppe.

On entend par "homogène" que cette température appliquée à la surface de l'enveloppe tubulaire ne varie pas d'au plus 20°C sur l'ensemble de cette surface.

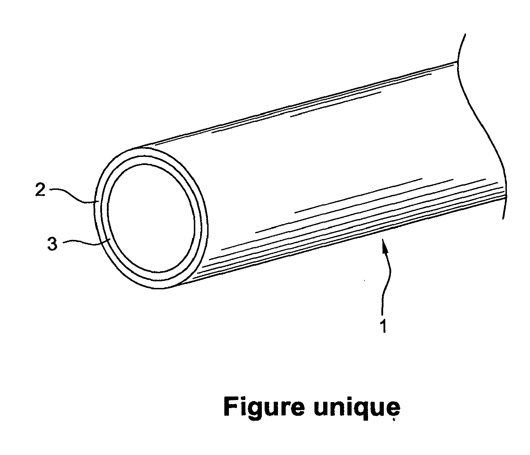

L'invention sera décrite plus en détail en référence à l'unique dessin annexé, lequel représente schématiquement une enveloppe de protection thermo-rétractable selon un mode de réalisation préféré de l'invention;

La Figure unique montre une enveloppe thermo-rétractable, ou gaine thermo-rétractable, pour la protection 1 de gaines électriques selon un mode de réalisation préféré de l'invention.

Cette gaine de protection 1 qui est d'un seul tenant, peut être obtenue notamment par extrusion-soufflage multicouche.

Cette gaine de protection 1 comporte une couche externe 2 et une couche interne 3. La couche interne 3 est destinée à être placée du côté des gaines électriques à protéger tandis que la couche externe 2 est destinée à être en contact avec le sol.

La couche externe 2 comporte un agent anti-racine et la couche interne 3 comporte un insecticide. La couche externe 2 assure avantageusement la protection de la couche interne 3 dotée de propriété anti-termites.

En effet, au fil du temps, des racines peuvent se développer dans l'environnement immédiat de la gaine de protection 1. Or, durant leur croissance, ces racines pourraient venir percer la couche comportant l'insecticide 3 si celle-ci n'était pas protégée par la couche externe 2 comportant l'agent anti-racine. Cette couche comportant l'insecticide dépourvu ou non d'action systémique, n'est en effet pas phytotoxique. En cheminant dans le réseau racinaire qu'ils ont investi, les termites pourraient alors franchir sans gène une gaine uniquement dotée d'un insecticide, cette gaine ayant été préalablement pénétrée en de multiples points par les racines.

Par ailleurs, la couche externe 2 forme avantageusement un écran empêchant la migration de l'insecticide contenu dans la couche interne 3 vers le milieu extérieur environnant la gaine de protection 1. De même, l'interposition d'une couche externe 2 entre le milieu extérieur environnant la gaine et la couche interne 3 contenant l'actif anti termites évite que les conditions environnementales à la gaine ne dégradent l'actif anti termites, le rendant inefficace. Les propriétés de l'actif anti termites sont ainsi conservées dans le temps.

L'actif anti-racine de la couche externe 2 est, par exemple, l'acide 2-(4-chloro-2-méthylphénoxy) propionique (n° CAS 93-65-2) intégré dans la masse du polymère constituant la couche externe. L'acide 2-(4-chloro-2-méthylphénoxy) propionique (n° CAS 93-65-2) par exemple à des doses variant de 0,10 % 2,00 % (m/m) exerce une forte action anti-racine. Alternativement, cet actif anti-racine peut être un herbicide chlorophénoxylé.

La couche externe 2 est obtenue à partir d'une matière plastique de base comprenant 20% en poids de polymère thermo-rétractable et 80% en poids de polymère non thermo-rétractable. Le polymère non thermo-rétractable est un polyéthylène basse densité (PEBD) tandis que le polymère thermo-rétractable est un copolymère d'éthylène-acétate de vinyle (EVA). Avantageusement, ce copolymère contient de 4% à 30 % en poids d'acétate de vinyle.

L'exposition de l'enveloppe thermo-rétractable à une température égale ou supérieure à la température de ramollissement du polymère thermo-rétractable entraine une rétraction de l'ensemble de la structure de l'enveloppe qui vient alors enserrer les gaines électriques à protéger. La source de chaleur mise en oeuvre pour chauffer l'enveloppe peut être un décapeur thermique ou encore un chalumeau.

La température appliquée est toutefois inférieure à la température de décomposition des agents anti-racine et insecticide pour éviter de déstabiliser ces agents, ce qui pourrait les rendre inopérants.

Cette couche externe 2 comporte également des actifs absorbeurs d'ultraviolet connus de l'homme de l'art, tels que le noir de carbone, les salicylates, benzoates de phényle et benzophénones par exemple.

Cette couche externe 2 peut représenter de 10 à 80 % de l'épaisseur totale de la gaine de protection 1.

Dans leurs explorations du milieu, les insectes cibles viennent au contact de la couche externe 2 qui ne les repousse pas. Tentant de la franchir, ils érodent la couche externe 2 et parviennent sur une infime surface à la couche interne 3 dont la teneur en insecticide n'ayant pas diminuée au contact du milieu extérieur environnant l'enveloppe 1, génère rapidement une mortalité élevée sur les insectes cibles. Les ruptures de la couche externe 2 sous l'action des termites sont d'une surface trop faible pour que le milieu extérieur environnant l'enveloppe 1 ne puisse dégrader l'insecticide.

La couche interne 3 a, par exemple, une épaisseur comprise entre 10 µm et 300 µm. Cette couche interne 3 qui vient au contact des gaines électriques à protéger constitue la barrière anti-termites proprement dite. Elle contient un insecticide de la famille des pyréthrinoïdes intégré à forte dose dans la masse du polymère constitutif de la couche interne.

La bifenthrine (n° CAS 82657-04-3) à des doses variant de 0,05 % à 2,00 % (m/m) dans une couche de polyéthylène basse densité convient sans être exclusif. L'alpha-cypermétrine la perméthrine, la cyperméthrine associées à un polymère choisi dans le groupe comprenant le polyéthylène basse densité, le polyéthylène haute densité, le polypropylène et l'éthylène-acétate de vinyle conviennent également.

Aux doses énoncées, l'insecticide exerce une action rapide et létale à l'encontre des termites ce qui interdit tout franchissement de l'enveloppe de protection 1. Cette couche interne 3 peut représenter de 20 à 90 % de l'épaisseur totale de l'enveloppe de protection.

L'épaisseur totale du matériau constitué des deux couches décrites est susceptible de varier de 50 µm à 5 millimètres selon la nature et la disposition de l'élément à protéger.

## Revendications

1. Barrière de protection pour un objet semi-enterré ou enterré,
- ladite barrière comportant une feuille de matière plastique longitudinale dont la dimension transversale est instable à la chaleur, ladite feuille comportant au moins un agent anti-racine et un agent insecticide de manière à former une barrière matérielle contre les racines et les insectes vivants ou se déplaçant dans le sol,
- ladite barrière ayant une structure multicouche qui comprend une couche externe (2) comportant un agent anti-racine et une couche interne (3) comportant un agent insecticide,
- au moins ladite couche externe (2) étant formée à partir d'un mélange d'un ou plusieurs polymères thermo-rétractables et d'un ou plusieurs polymères non thermo-rétractables.

2. Barrière selon la revendication 1, **caractérisée en ce qu'**elle est d'un seul tenant.

3. Barrière selon la revendication 1 ou 2, **caractérisée en ce que** ladite couche externe (2) comporte de plus au moins un absorbeur d'ultraviolet.

4. Barrière selon l'une quelconque des revendications 1 à 3, **caractérisée en ce que** la couche externe (2) a une perméabilité à la vapeur d'eau inférieure ou égale à 1,5 g/m²/jour.1013,25 hPa, telle que la perméabilité à la vapeur d'eau est mesurée sous une pression de 1013,25 hPa sur une surface de 1 m² pendant 24 heures à 25°C et à une humidité relative de 60%.

5. Barrière selon l'une quelconque des revendications 1 à 4, **caractérisée en ce que** ladite couche externe a de plus une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%.

6. Barrière selon l'une quelconque des revendications 1 à 4, **caractérisée en ce que** ladite barrière comprend de plus une couche intermédiaire, ladite couche intermédiaire ayant une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%.

7. Barrière selon l'une quelconque des revendications 1 à 6 **caractérisée en ce que** le ou les polymères thermo-rétractables sont choisis dans le groupe comprenant un copolymère éthylène-(meth)acrylate d'alkyle, un copolymère d'éthylène et d'ester vinylique d'acide carboxylique saturé, un copolymère éthylène-acétate de vinyle, un polychlorure de vinylydène (PVDC), un fluoropolymère tel que le polymère perfluoro(éthylène-propylène) (FEP) ou le Perfluoroalkoxy (PFA).

8. Barrière selon l'une quelconque des revendications 1 à 7, **caractérisée en ce que** ladite couche externe a une épaisseur comprise entre 10 et 150 µm, et encore mieux entre 50 et 100 µm, de manière à limiter la surface de dégradation de la couche externe causée par des insectes avant leur contact avec l'agent insecticide de ladite couche interne.

9. Barrière selon l'une quelconque des revendications 1 à 8, **caractérisée en ce que** ladite feuille comprend au moins un additif choisi dans le groupe comprenant un agent glissant, un agent antistatique, un agent anti-bloquant, un colorant, un pigment et des combinaisons de ces éléments.

10. Gaine thermo-rétractable pour protéger une conduite ou un tuyau, **caractérisée en ce qu'**elle est constituée d'une barrière de protection selon l'une quelconque des revendications 1 à 9.

11. Gaine selon la revendication 10, **caractérisé en ce qu'**elle est micro perforée.

12. Utilisation d'une enveloppe tubulaire formée à partir de ladite barrière de protection selon l'une quelconque des revendications 1 à 9 pour assurer la jonction étanche d'un film de protection et d'un manchon de protection, ledit film et ledit manchon étant destinés à former une barrière matérielle d'un objet enterré ou semi-enterré contre les racines et/ou les insectes vivants ou se déplaçant dans le sol, **caractérisée en ce qu'**on réalise les étapes suivantes:
a) on réalise une découpe dans ledit film de protection pour permettre le passage dudit manchon de protection,
b) on introduit ledit manchon au travers de ladite découpe en s'assurant qu'une partie de recouvrement dudit film de protection formant alors saillie du reste dudit film de protection recouvre au moins partiellement le pourtour de la partie dudit manchon ayant passé au travers de ladite découpe,
c) on introduit par l'extrémité libre de ladite partie dudit manchon ayant passé au travers de ladite découpe, ladite enveloppe tubulaire et on positionne ladite enveloppe tubulaire de sorte qu'elle recouvre au moins partiellement ladite partie de recouvrement et ledit manchon,
d) on chauffe ladite enveloppe tubulaire de sorte qu'elle enserre ladite partie de recouvrement dudit film de protection et ledit manchon de protection.

13. Utilisation selon la revendication 12, **caractérisée en ce qu'**ayant réalisé à l'étape a) une découpe en croix dudit film de protection, on s'assure à l'étape b) que l'ensemble des portions libres dudit film résultant de cette découpe et solidaires dudit film, entourent la partie dudit manchon ayant passé au travers de ladite découpe.

14. Utilisation selon la revendication 12 ou 13, **caractérisée en ce qu'**à l'étape d), on applique une température homogène sur l'ensemble de ladite enveloppe tubulaire pour éviter l'apparition d'un point de rupture locale dans ladite enveloppe.

## Patentansprüche

1. Schutzbarriere für ein teilweise oder vollständig vergrabenes Objekt,
- wobei die Barriere eine longitudinale Kunststofffolie umfasst, deren transversale Abmessung wärmeinstabil ist, wobei die Folie wenigstens ein Wurzelbekämpfungsmittel und ein Insektenbekämpfungsmittel enthält, derart, dass eine materielle Barriere gegenüber Wurzeln und oberirdisch oder unterirdisch sich bewegenden Insekten gebildet wird,
- wobei die Barriere eine Mehrschichtstruktur besitzt, die eine äußere Schicht (2), die ein Wurzelbekämpfungsmittel enthält, und eine innere Schicht (3), die ein Insektenbekämpfungsmittel enthält, umfasst,
- wobei wenigstens die äußere Schicht (2) aus einem Gemisch aus einem oder mehreren wärmeschrumpfbaren Polymeren und aus einem oder mehreren nicht wärmeschrumpfbaren Polymeren gebildet ist.

2. Barriere nach Anspruch 1, **dadurch gekennzeichnet, dass** sie einteilig ausgebildet ist.

3. Barriere nach Anspruch 1 oder 2, **dadurch gekennzeichnet, dass** die äußere Schicht (2) außerdem wenigstens einen Ultraviolettabsorber enthält.

4. Barriere nach einem der Ansprüche 1 bis 3, **dadurch gekennzeichnet, dass** die äußere Schicht (2) eine Wasserdampfpermeabilität kleiner oder gleich 1,5 g/m²/Tag · 1013,25 hPa besitzt, wobei die Wasserdampfpermeabilität bei einem Druck von 1013,25 hPa auf einer Oberfläche von 1 m² während 24 Stunden bei 25 °C und bei einer relativen Feuchtigkeit von 60 % gemessen wird.

5. Barriere nach einem der Ansprüche 1 bis 4, **dadurch gekennzeichnet, dass** die äußere Schicht außerdem eine Sauerstoffpermeabilität kleiner als 5000 cm³/m²/Tag · 1013,25 hPa besitzt, wobei die Sauerstoffpermeabilität bei einem Druck von 1013,25 hPa auf einer Oberfläche von 1 m² während 24 Stunden bei 25 °C bei einer relativen Feuchtigkeit von 60 % gemessen wird.

6. Barriere nach einem der Ansprüche 1 bis 4, **dadurch gekennzeichnet, dass** die Barriere außerdem eine Zwischenschicht umfasst, wobei die Zwischenschicht eine Sauerstoffpermeabilität kleiner als 5000 cm³/m²/Tag · 1013,25 hPa besitzt, wobei die Sauerstoffpermeabilität bei einem Druck von 1013,25 hPa auf einer Oberfläche von 1 m² während 24 Stunden bei 25 °C und bei einer relativen Feuchtigkeit von 60 % gemessen wird.

7. Barriere nach einem der Ansprüche 1 bis 6, **dadurch gekennzeichnet, dass** die wärmeschrumpfbaren Polymere aus der Gruppe gewählt sind, die enthält: ein Alkyl-Ethylen-(Meth)Acrylat-Copolymer, ein Copolymer aus Ethylen und gesättigtem Carboxyl-Vinylsäureester, einem Vinyl-Ethylenacetat-Copolymer, einem Vinyliden-Polychlorid (PVDC), einem Fluorpolymer wie etwa Perfluor (Ethylen-Propylen)-Polymer (FEP) oder Perfluoralkoxy (PFA).

8. Barriere nach einem der Ansprüche 1 bis 7, **dadurch gekennzeichnet, dass** die äußere Schicht eine Dicke im Bereich von 10 bis 150 µm oder besser im Bereich von 50 bis 100 µm besitzt, derart, dass die Oberflächenverschlechterung der äußeren Schicht, die durch die Insekten vor ihrem Kontakt mit dem Insektenbekämpfungsmittel der inneren Schicht verursacht wird, begrenzt wird.

9. Barriere nach einem der Ansprüche 1 bis 8, **dadurch gekennzeichnet, dass** die Folie wenigstens einen Zusatzstoff umfasst, der aus der Gruppe gewählt ist, die ein Gleitmittel, ein Antistatikmittel, ein Antiblockiermittel, einen Farbstoff, ein Pigment und Kombinationen dieser Elemente enthält.

10. Wärmeschrumpfbare Hülle zum Schützen einer Leitung oder eines Schlauchs, **dadurch gekennzeichnet, dass** sie aus einer Schutzbarriere nach einem der Ansprüche 1 bis 9 gebildet ist.

11. Hülle nach Anspruch 10, **dadurch gekennzeichnet, dass** sie mikroperforiert ist.

12. Verwendung einer rohrförmigen Umhüllung, die aus der Schutzbarriere nach einem der Ansprüche 1 bis 9 gebildet ist, um die dichte Verbindung eines Schutzfilms und einer Schutzmuffe zu gewährleisten, wobei der Film und die Muffe dazu bestimmt sind, eine materielle Barriere eines vergrabenen oder teilweise vergrabenen Objekts gegenüber Wurzeln und/oder Insekten, die sich oberirisch oder unterirdisch bewegen, zu bilden, **dadurch gekennzeichnet, dass** die folgenden Schritte ausgeführt werden:
a) Ausführen eines Einschnitts in dem Schutzfilm, um den Durchgang der Schutzmuffe zu ermöglichen,
b) Einführen der Muffe durch den Einschnitt, wobei sichergestellt wird, dass ein Abdeckteil des Schutzfilms, der somit vom Rest des Schutzfilms vorsteht, wenigstens teilweise den Umfang des Teils der Muffe, der sich durch den Einschnitt bewegt hat, abdeckt,
c) Einführen durch das freie Ende des Teils der Muffe, der sich durch den Einschnitt bewegt hat, der rohrförmigen Umhüllung und Positionieren der rohrförmgen Umhüllung in der Weise, dass sie wenigstens teilweise den Abdeckteil und die Muffe abdeckt,
d) Erwärmen der rohrförmigen Umhüllung in der Weise, dass sie den Abdeckteil des Schutzfilms und die Schutzmuffe umklammert.

13. Verwendung nach Anspruch 12, **dadurch gekennzeichnet, dass** dann, wenn im Schritt a) ein kreuzförmiger Einschnitt in dem Schutzfilm verwirklicht worden ist, im Schritt b) sichergestellt wird, dass die Gesamtheit der freien Abschnitte des Films, die sich aus diesem Einschnitt ergeben und mit dem Film fest verbunden sind, den Teil der Muffe umgeben, der sich durch den Einschnitt bewegt hat.

14. Verwendung nach Anspruch 12 oder 13, **dadurch gekennzeichnet, dass** im Schritt d) eine homogene Temperatur auf die gesamte rohrförmige Umhüllung ausgeübt wird, um das Auftreten eines lokalen Risspunkts in der Umhüllung zu vermeiden.

## Claims

1. Protective barrier for a semi-buried or buried article,
- said barrier comprising a longitudinal plastic sheet, the transverse dimension of which is not stable with respect to heat, said sheet comprising at least a root-resistant agent and an insecticidal agent so as to form a material barrier against roots and insects that live or move about in the soil,
- said barrier having a multilayer structure that comprises an outer layer (2) comprising a root-resistant agent and an inner layer (3) comprising an insecticidal agent,
- at least said outer layer (2) being formed from a mixture of one or more heat shrinkable polymers and from one or more non-heat shrinkable polymers.

2. Barrier according to Claim 1, **characterized in that** it is in one piece.

3. Barrier according to Claim 1 or 2, **characterized in that** said outer layer (2) furthermore comprises at least one ultraviolet absorber.

4. Barrier according to any one of Claims 1 to 3, **characterized in that** the outer layer (2) has a water vapour permeability of less than or equal to 1.5 g/m²/day.1013.25 hPa, such that the water vapour permeability is measured under a pressure of 1013.25 hPa over a surface area of 1 m² for 24 hours at 25°C and at a relative humidity of 60%.

5. Barrier according to any one of Claims 1 to 4, **characterized in that** said outer layer furthermore has an oxygen permeability of less than 5000 cm³/m²/day.1013.25 hPa, such that the oxygen permeability is measured under a pressure of 1013.25 hPa over a surface area of 1 m² for 24 hours at 25°C and at a relative humidity of 60%.

6. Barrier according to any one of Claims 1 to 4, **characterized in that** said barrier furthermore comprises an intermediate layer, said intermediate layer having an oxygen permeability of less than 5000 cm³/m²/day.1013.25 hPa, such that the oxygen permeability is measured under a pressure of 1013.25 hPa over a surface area of 1 m² for 24 hours at 25°C and at a relative humidity of 60%.

7. Barrier according to any one of Claims 1 to 6, **characterized in that** the heat shrinkable polymer(s) are selected from the group comprising an ethylene-alkyl (meth)acrylate copolymer, a copolymer of ethylene and of a saturated carboxylic acid vinyl ester, an ethylene-vinyl acetate copolymer, a polyvinylidene chloride (PVDC), a fluoropolymer such as the perfluoro(ethylene-propylene) polymer (FEP) or perfluoroalkoxy (PFA).

8. Barrier according to any one of Claims 1 to 7, **characterized in that** said outer layer has a thickness of between 10 and 150 µm, and even better of between 50 and 100 µm, so as to limit the surface area of degradation of the outer layer caused by insects before their contact with the insecticidal agent of said inner layer.

9. Barrier according to any one of Claims 1 to 8, **characterized in that** said sheet comprises at least one additive selected from the group comprising a slip agent, an antistatic agent, an antiblocking agent, a colourant, a pigment and combinations of these elements.

10. Heat shrinkable sheath for protecting a duct or a pipe, **characterized in that** it consists of a protective barrier according to any one of Claims 1 to 9.

11. Sheath according to Claim 10, **characterized in that** it is microperforated.

12. Use of a tubular envelope formed from said protective barrier according to any one of Claims 1 to 9 for providing the sealed connection of a protective film and of a protective sleeve, said film and said sleeve being intended to form a material barrier for a buried or semi-buried article against roots and/or insects that live or move about in the soil, **characterized in that** the following steps are carried out:
a) a cut is made in said protective film in order to allow the passage of said protective sleeve,
b) said sleeve is introduced through said cut, while ensuring that one overlapping part of said protective film thus projecting from the rest of said protective film at least partially covers the perimeter of the part of said sleeve that has passed through said cut,
c) said tubular envelope is introduced via the free end of said part of said sleeve that has passed through said cut, and said tubular envelope is positioned so that it at least partially covers said overlapping part and said sleeve,
d) said tubular envelope is heated so that it tightly grips said overlapping part of said protective film and said protective sleeve.

13. Use according to Claim 12, **characterized in that** having made a cross cut in said protective film in step a), it is ensured, in step b), that all of the free portions of said film resulting from this cut and firmly attached to said film, surround the part of said sleeve that has passed through said cut.

14. Use according to Claim 12 or 13, **characterized in that**, in step d), a uniform temperature is applied to the whole of said tubular envelope in order to prevent the appearance of a local breakage point in said envelope.
